# EUROPEAN PATENT SPECIFICATION

(11) **EP 0 629 486 B1**
(45) Date of publication and mention of the grant of the patent: **29.04.1998**
(21) Application number: 94830291.4
(22) Date of filing: 14.06.1994
(51) Int. Cl.: B29C 51/42, B29C 51/10, B29C 51/26

(54) **A system, provided with preheating stations, for thermoforming plate-like material**
Ein System ausgestattet mit Vorheizstationen zum Warmformen von plattenförmigen Material
Système équipé de stations de préchauffage pour le thermoformage de matériaux en forme de plaques

(30) Priority: 18.06.1993 IT MI931323
(43) Date of publication of application: 21.12.1994
(73) Proprietor: COMI S.r.l., I-24040 Zingonia (Bergamo) (IT)
(72) Inventor: Ballabio, Enzo, I-24040 Zingonia (Bergamo) (IT); Sertori, Remo, I-24040 Zingonia (Bergamo) (IT)
(74) Representative: Cicogna, Franco

(56) References cited:
- EP-A- 0 172 735
- DE-A- 2 743 184
- DE-C- 4 113 568
- DE-U- 9 104 429
- US-A- 4 486 172

## Description

### BACKGROUND OF THE INVENTION

The present invention relates to a system for thermoforming plate-like materials, said system including pre-heating stations.

As is known, in conventional in-line thermoforming apparatus, the thermoplastic material is heated by a heating system including IR ceramic resistances.

From DE-C-41 13 568 a device for thermoforming plate-like materials is known, including heating stations, an automated loader for automatically loading thermoplastic material plates, a vacuum-forming chamber, an unloading station and conveyor means for transferring step by step the plates being processed through said system to the unloading station.

It is also known, in conventional in-line thermoforming apparatus, that the thermoplastic material is heated by a heating system including IR ceramic resistances.

In the case of polystyrene (HIPS) or acrylonitrile-butadiene-styrene resins (ABS) plates, having a thickness of about 4 mm, this type of heating allows to increase very quickly the temperature of the plates, i.e. from the room temperature to the plasticizing temperature of said plates, in a period of time less than 1 minute.

By using a quick heating process, however, there is at first consumed a comparatively high amount of power and, moreover, since the IR heating is a radiating type of heating, there occur great losses of heat toward the outer environment, with related great drawbacks.

Moreover, by using a quick type of heating, the thermoplastic material forming the plate is mainly affected by the irradiated heat on its surface, thereby the surface of the plate will have a temperature greater than the temperature at the core portion of the plate, thereby providing an uneven heating, that is an excessive surface heating and an insufficient heating at the core of the plate.

It should be apparent that this temperature differential will in particular depend on the thickness of the plate.

An unevenly heated material, will be stretched unevenly during the thermoforming thereof and, more specifically, the surface regions will be much more stretched than the core center, because of a not proper thermoforming, with the generation of great stresses which will remain in the thermoformed piece for a long time.

In particular, in the case in which the formed pieces are drilled or cut, can occur deformations thereof or size changes, since this operating step will break the stressed fibres of the material forming the thermoformed pieces.

Similar problems occur as the thermoformed pieces or panels are subjected to low temperatures, such as, for example, those which are conventionally used in the foaming processes.

The above mentioned drawbacks occurring with materials such as HIPS or ABS, which are materials which can be easily processed, are further aggravated in the case of the materials such as polypropylene (PP) or polymethylmethacrylate (PMMA), where the thermal differential between the surface and core of these materials will cause larger stresses.

Yet another problem affecting the prior thermoforming systems and methods, is that related to the effective temperature of the thermoplastic material which is supplied to the thermoforming apparatus; in fact, if the material has been extruded from a long time, it will have already released the extrusion heat whereas, if it has been just extruded, it will have an uneven temperature that is it will be hot at its central part and cold at its peripheral portion.

Moreover, the environment temperature is different depending on the year periods thereby, by conventional methods, it is not possible to obtain a proper indication of the effective temperature to be used.

In this connection it should be pointed out that prior in-line thermoforming apparatus operate with a preset operating time cycle, thereby the temperature of the IR ovens must be continuously adjusted, in order to fit them to the temperature of the plate material being fed.

This temperature adjustment requires moreover that each individual heating resistance be automatically adjusted, with the requirement of using very sofisticated and expensive electronic control apparatus.

Moreover, the adjustment of the temperature, because of the conventional thermal flywheel effect, is not an istantaneous one.

### SUMMARY OF THE INVENTION

Accordingly, the aim of the present invention is to overcome the above disclosed drawbacks, by providing a system for thermoforming thermoplastic plate-like materials, in which the heating is not performed by heating techniques requiring short processing times, while preserving a high yield speed.

Within the scope of the above mentioned aim, a main object of the present invention is to provide such a system which allows to obtain an even and accurately controlled heating of the plate materials, through the overall thickness thereof, while eliminating the thermoforming stresses and simplifying all the operating steps.

Another object of the present invention is to provide such a system which allows to obtain a very precise adjustment of the temperature of the plate material, independently from its starting conditions, while providing a very great power saving.

According to one aspect of the present invention, the above mentioned aim and objects, as well as yet other objects, which will become more apparent hereinafter, are achieved by a system for thermoforming plate-like materials, including pre-heating stations, an automatic loader for automatically loading thermoplastic material plates, a vacuum forming chamber, an unloading station and conveyor means for transferring step by step the plates being processed through said system to the unloading station, **characterized in that** said system comprises, downstream of said loader, a first pre-heating chamber for heating a plate up to about 30% of the end plasticizing temperature thereof, a second preheating chamber for heating said plate up to about 60% of the plasticizing temperature thereof, and a plasticizing chamber for performing the end heating of said plate up to the plasticizing temperature thereof.

### BRIEF DESCRIPTION OF THE DRAWINGS

Further characteristics and advantages of the present invention will become more apparent hereinafter from the detailed disclosure of a preferred though not exclusive, embodiment of a system for thermoforming plate-like materials, including pre-heating stations, and which is illustrated, by way of an indicative, but not limitative example, in the accompanying drawings, where:

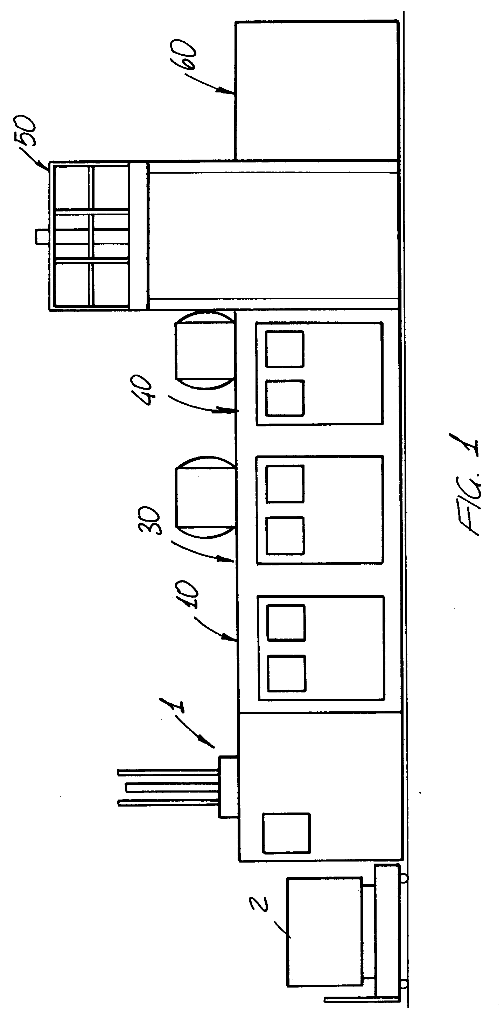

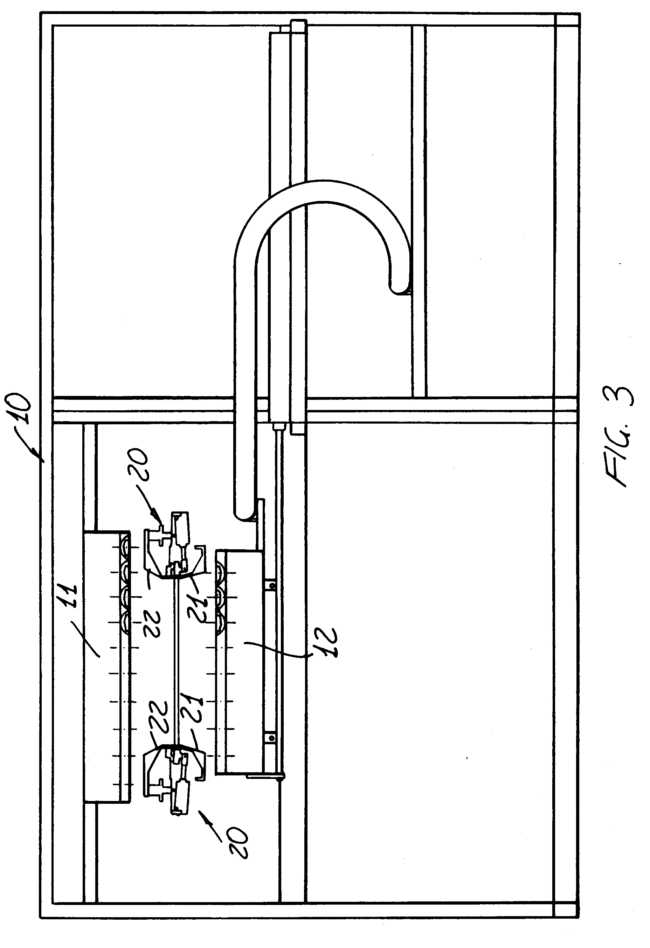

Figure 1 schematically illustrates the system for thermoforming plate-like materials according to the present invention, as seen in elevation;

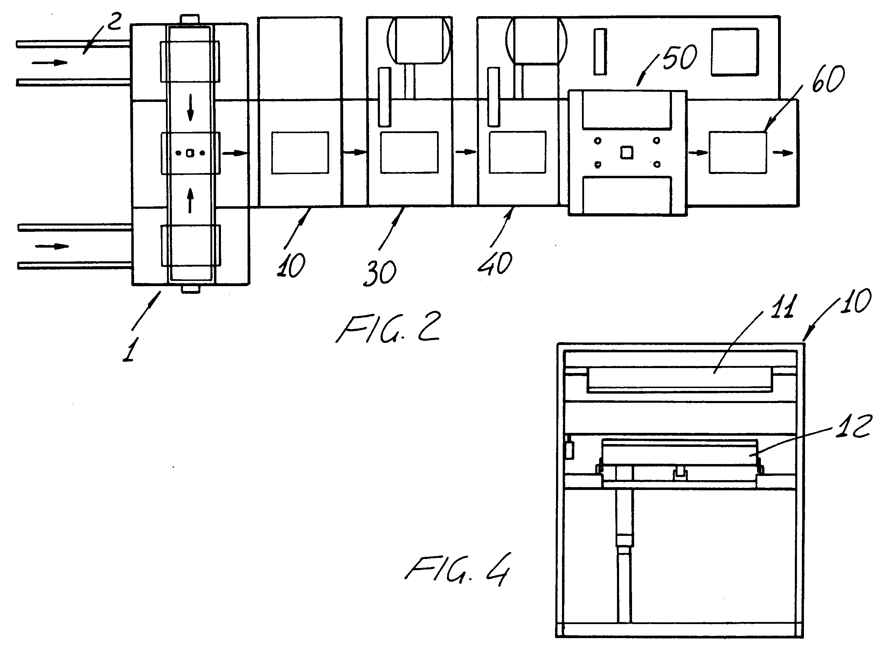

Figure 2 is a top plan view of the system according to the present invention;
Figure 3 is a cross-sectional view of the pre-heating chamber of the system according to the invention; and
Figure 4 is a longitudinal cross-sectional view of the pre-heating chamber of the system.

### DESCRIPTION OF THE PREFERRED EMBODIMENT

With reference to the number references of the figures of the accompanying drawings, the system for thermoforming plate-like materials, with pre-heating stations, according to the present invention, comprises an automatic loader for automatically loading the plates to be processed, which has been generally indicated at the reference number 1, which is advantageously constituted by a transfer element provided with suckers connected to a vacuum circuit, for taking up the individual plates from a truck 2, there being moreover provided a feeler or sensor element for controlling the thickness so as to prevent several plates from being simultaneously loaded.

Downstream of the automatic loader 1 there is provided a first pre-heating chamber, indicated at the reference number 10 consistuted, as is clearly shown in Figure 3, by a top heating panel 11 and a bottom heating panel 12, which are arranged to form a sandwich, and being provided with IR ceramic material resistances.

The assembly of the two panels is designed so as to reduce to a minimum the heat losses and to make the assembly like an oven.

The mentioned resistances can be adjusted by zones, owing to the provision of a central control unit, adapted to hold the programmed temperatures, by means of probes, which are associated with each zone of the top panel.

The first pre-heating station is so designed as to cause the plates being processed to achieve a temperature which is about 30% of their end plasticizing temperature.

More specifically, the plate is introduced into the pre-heating chamber by means of a conveyor, including grippers 20, which are longitudinally arranged and engaging with the longitudinal edges of the plate, said grippers 20 comprising a bottom gripper 21 and a top gripper 22 which can be pneumatically actuated.

From the outlet of the first pre-heating chamber, the plate is fed into a second pre-heating chamber, indicated at the reference number 30, which operates to bring the temperature of the plate to a temperature value corresponding to about 60% of the end plasticizing temperature.

Also the second pre-heating chamber is constituted by two heating panels, which are arranged so as to form a sandwich construction, with the related IR ceramic heating resistances, mounted in-side reflective parabolic reflectors, adapted to increase the radiation as well to reduce to a minimum the heat losses.

These heating resistances are also controlled by the mentioned central control unit, so as to provide optimum heating properties.

The conveyor, after having introduced the plate into the second pre-heating chamber, will introduce said plate into a plasticizing chamber, indicated at the reference number 40, where the plastic material is brought to its plasticizing temperature by two sandwich arranged heating panels, including IR ceramic heating resistances, mounted inside reflective parabolic reflectors, adapted to improve the radiation and reduce to a minimum the heat losses.

The heating resistances are so arranged as to allow an easy temperature adjustment to be made, step by step, in order to provide optimum heating results.

At the outlet of the plasticizing chamber, the plate is introduced into the vacuum forming station 50, where there are provided suitably locking means for locking the plate and properly forming it, which occurs without any problems and without generating localized stresses, since the plate will have achieved an even temperature through the overall thickness thereof and, accordingly, can be processed in a very easy manner.

After the thermoforming step, said plate is conveyed to an unloading station, indicated at the reference number 60 where, if desired, it can be cooled by pressurized air jets, of low pressure, and ejected by a blower and sucker assembly.

To the foregoing it is to be added that the above disclosed heating unit can also be applied to conventional in-line thermoforming machines, so as to remarkably increase the production yield thereof, since the plate will be brought to its plasticizing temperature in three subsequent times, thereby providing an end temperature which will be very even.

Finally, since the temperature of the plate is accurately monitored, owing to the gradual heatings thereof, it will be possible to obtain optimum results independently from the starting temperature of the plate which will not affect the end temperature of the plate, since the oven will be automatically adjusted so as to provide the plate with the desired temperature value.

From the above disclosure it should be apparent that the invention fully achieves the intended aim and objects.

In particular, the fact is to be pointed out that a system has been provided which performs two subsequent pre-heating steps, while allowing to remarkably increase the production yield, and also improving the end quality of the made product.

The invention as disclosed is susceptible to several variations and modifications, all of which will come within the scope of the invention.

Moreover, all the constructional details can be replaced by other technically equivalent elements.

In practicing the invention, the used materials, as well as the contingent size and shapes, can be any, depending on requirements.

## Claims

1. A system for thermoforming plate-like materials, including pre-heating stations, an automatic loader (1) for automatically loading thermoplastic material plates, a vacuum forming chamber (50), an unloading station (60) and conveyor means (20) for transferring step by step the plates being processed through said system to the unloading station, **characterized in that** said system comprises, downstream of said loader (1), a first pre-heating chamber (10) for heating a plate up to about 30% of the end plasticizing temperature thereof, a second preheating chamber (30) for heating said plate up to about 60% of the plasticizing temperature thereof, and a plasticising chamber (40) for performing the end heating of said plate up to the plasticizing temperature thereof.

2. A system, according to the preceding Claim, characterized in that said plate automatic loader (1) comprises sucker means for taking up the individual plates, there being moreover provided control means for causing the system to stop as several plates are simultaneously taken up.

3. A system, according to the preceding Claims, characterized in that said pre-heating chambers and the plasticizing chamber are provided with a top heating panel (11) and a bottom heating panel (12), arranged opposite to one another, with respect to the plate, and controlled by a central unit for controlling the plate temperature.

4. A system, according to one or more of the preceding claims, characterized in that said panels (11, 12) include IR ceramic heating resistances, mounted inside reflective parabolic elements in order to increase the radiation and reduce to a minimum the losses of heat.

5. A system, according to one or more of the preceding claims, characterized in that said conveyor means for transferring step by step said plates are provided with grippers (20) coupled to a conveyor element and including a bottom portion (21) and a top portion (22) for engaging the longitudinal edges of said plate.

6. A system, according to one or more of the preceding claims, characterized in that said. system further comprises, in said unloading station (60), means for cooling the thermoformed plate, said means including a low pressure pressurized air system and a blower and sucking assembly.

## Patentansprüche

1. Ein System zum Warmformen von Plattenmaterialien, das Vorheizstationen, eine automatische Ladevorrichtung (1) zum automatischen Laden von Platten aus thermoplastischem Material, eine Vakuumformgebungskammer (50), eine Entladestation (60) und eine Beförderungsvorrichtung (20) umfaßt, um die verarbeiteten Platten schrittweise durch dieses System zur Entladestation zu befördern, dadurch gekennzeichnet, daß dieses System hinter dieser Ladevorrichtung (1) eine erste Vorheizkammer (10) umfaßt, um eine Platte auf ca. 30% ihrer endgültigen Verarbeitungstemperatur zu erhitzen, eine zweite Vorheizkammer (30), um diese Platte auf etwa 60% ihrer Verarbeitungstemperatur zu erhitzen, und eine Verarbeitungskammer (40), um das endgültige Erhitzen dieser Platte auf ihre Verarbeitungstemperatur durchzuführen.

2. Ein System nach dem vorhergehenden Anspruch, dadurch gekennzeichnet, daß diese automatische Plattenaufnahmevorrichtung (1) Saugvorrichtungen für die Aufnahme einzelner Platten umfaßt, wobei ferner eine Steuervorrichtung bereitgestellt ist, um das System anzuhalten, wenn mehrere Platten gleichzeitig ergriffen werden.

3. Ein System nach den vorhergehenden Ansprüchen, dadurch gekennzeichnet, daß diese Vorheizkammern und die Verarbeitungskammer mit einer oberen Heizplatte (11) und einer unteren Heizplatte (12) ausgestattet sind, die bezüglich der Platte einander gegenüberliegen und von einer zentralen Einheit zur Regelung der Plattentemperatur gesteuert werden.

4. Ein System nach einem oder mehreren der vorhergehenden Ansprüche, dadurch gekennzeichnet, daß diese Platten (11, 12) keramische Infrarot-Heizwiderstände umfassen, die in reflektierenden parabolischen Bauteilen angebracht sind, um die Strahlung zu verstärken und die Wärmeverluste auf ein Minimum zu reduzieren.

5. Ein System nach einem oder mehreren der vorhergehenden Ansprüchen, dadurch gekennzeichnet, daß diese Beförderungsvorrichtung für die schrittweise Beförderung dieser Platten mit Greifteilen (20) ausgestattet ist, die an einem Beförderungsteil befestigt sind und einen unteren Bereich (21) und einen oberen Bereich (22) umfassen, um die Längskanten dieser Platte zu ergreifen.

6. Ein System nach einem oder mehreren der vorhergehenden Ansprüche, dadurch gekennzeichnet, daß dieses System ferner in dieser Entladestation (60) eine Vorrichtung umfaßt, um die warmgeformte Platte abzukühlen, wobei diese Vorrichtung ein Niederdruck-Druckluftsystem und eine Gebläse- und Saugvorrichtung umfaßt.

## Revendications

1. Un système pour le façonnage à chaud de matériaux en panneaux, comprenant des stations de préchauffage, un chargeur automatique (1) pour le chargement automatique des panneaux en matériau thermoplastique, une chambre de façonnage sous vide (50), une station de déchargement (60) et un dispositif convoyeur (20) pour transporter pas à pas les panneaux façonnés à travers ledit système vers la station de déchargement, caractérisé en ce que ledit système comprend en aval dudit chargeur (1) une première chambre de préchauffage (10) pour chauffer le panneau jusqu'à une température correspondant à environ 30% de sa température de plastification finale, une deuxième chambre de préchauffage (30) pour chauffer ledit panneau jusqu'à une température correspondant à environ 60% de sa température de plastification finale, et une chambre de plastification (40) pour effectuer le chauffage final dudit panneau jusqu'à sa température de plastification.

2. Un système selon la revendication précédente, caractérisé en ce que ledit chargeur automatique (1) des panneaux comprend des ventouses pour la saisie des panneaux un à un, y étant de plus mis en oeuvre un moyen de contrôle pour provoquer l'arrêt du système en cas de saisie simultanée de plusieurs panneaux.

3. Un système selon les revendications précédentes, caractérisé en ce que lesdites chambres de préchauffage et la chambre de plastification sont dotées d'une plaque chauffante supérieure (11) et d'une plaque chauffante inférieure (12), agencées de part et d'autre du panneau et sous le contrôle d'une unité centrale pour le réglage de la température du panneau.

4. Un système selon l'une ou plusieurs des revendications précédentes, caractérisé en ce que lesdites plaques (11, 12) comprennent des résistances céramiques pour le chauffage par rayons infrarouges montées à l'intérieur de réflecteurs paraboliques aptes à intensifier la radiation et à réduire au minimum les pertes de la chaleur.

5. Un système selon l'une ou plusieurs des revendications précédentes, caractérisé en ce que ledit dispositif convoyeur pour transporter pas à pas lesdits panneaux est doté d'outils de serrage (20) reliés à un élément transporteur et comprenant une partie inférieure (21) et une partie supérieure (22) pour engager les bords longitudinaux dudit panneau.

6. Un système selon l'une ou plusieurs des revendications précédentes, caractérisé en ce que ledit système comprend en outre, dans ladite station de déchargement (60), des dispositifs pour refroidir le panneau façonné à chaud, ledit dispositif comprenant un système d'air pressurisé opérant à basse pression et un dispositif de ventilation et d'aspiration.
